# EUROPÄISCHE PATENTSCHRIFT

(11) **EP 0 585 516 B1**
(45) Veröffentlichungstag und Bekanntmachung des Hinweises auf die Patenterteilung: **20.08.1997**
(21) Anmeldenummer: 93102428.5
(22) Anmeldetag: 17.02.1993
(51) Int. Cl.: F16C 27/06, B60K 17/24

(54) **Lager**
Bearing
Palier

(30) Priorität: 25.08.1992 DE 4228170
(43) Veröffentlichungstag der Anmeldung: 09.03.1994
(73) Patentinhaber: Firma Carl Freudenberg, 69469 Weinheim (DE)
(72) Erfinder: Bade, Karl Heinz, W-6942 Mörlenbach (DE); Gruber, Walter, W-6940 Weinheim (DE); Simuttis, Arnold, Dr., W-6550 Bad Kreuznach (DE)

(56) Entgegenhaltungen:
- EP-A- 0 300 093
- EP-A- 0 371 194
- DE-A- 2 061 625
- FR-A- 2 656 393
- US-A- 4 655 614

## Beschreibung

Die Erfindung betrifft ein Lager, umfassend einen inneren Stützring und einen den inneren Stützring mit radialem Abstand umschließenden äußeren Stützring, die durch zumindest drei in Umfangsrichtung verteilte Stegkörper aus gummielastischem Werkstoff radialelastisch aufeinander abgestützt sind, wobei die Stegkörper mit Halteflächen an den Stützringen festgelegt sind, und eine geringere axiale Ausdehnung aufweisen als die Stützringe und wobei, ausgehend von zumindest einem der Stützringe, zumindest zwei radial sich in Richtung des anderen Stützringes erstreckende Anschlagpuffer aus gummielastischen Werkstoff vorgesehen sind.

Ein solches Lager ist aus der DE-B-20 61 625 bekannt. Das vorbekannte Lager gelangt als Zwischenlager für die Gelenkwelle von Kraftfahrzeugen zur Anwendung, wobei mehrere in Umfangsrichtung gleichmäßig verteilte Stegkörper aus gummielastischem Werkstoff vorgesehen sind. Die Stegkörper erstrecken sich zwischen dem inneren und äußeren Stützring in radialer Richtung, wobei zwischen den in Umfangsrichtung mit Abstand benachbarten Stegkörpern jeweils ein Anschlagpuffer angeordnet ist, der am äußeren Stützring festgelegt ist, sich in radialer Richtung erstreckt und dem inneren Stützkörper im schwingungsfreien Zustand mit einem radialen Abstand benachbart zugeordnet ist. Dabei ist allerdings zu beachten, daß die Gebrauchseigenschaften des vorbekannten Lagers während einer langen Gebrauchsdauer wenig befriedigend sind. Im Anschluß an den Herstellungsprozeß und während der bestimmungsgemäßen Verwendung des Lagers treten innerhalb der Stegkörper gebrauchsdauerverringernde Zugspannungen auf, die zu einem vorzeitigen Ausfall des Lagers führen können.

Der Erfindung liegt die Aufgabe zugrunde, ein Lager der vorbekannten Art derart weiter zuentwickeln, daß gebrauchsdauerverringernde, herstellungsbedingte Zugspannungen innerhalb der Stegkörper aus gummielastischen Werkstoff zuverlässig vermieden werden und daß das Lager verbesserte Gebrauchseigenschaften während einer längeren Gebrauchsdauer aufweist. Die mechanischen Belastungen auf die Stegkörper sollen reduziert werden.

Diese Aufgabe wird erfindungsgemäß mit Anspruch 1 gelöst. Auf vorteilhafte Ausgestaltungen nehmen die Unteransprüche Bezug.

Zur Vermeidung herstellungsbedingter Zugspannungen innerhalb der Stegkörper aus gummielastischem Werkstoff ist es vorgesehen, daß die Haltefläche auf der dem inneren Stützring zugewandten Seite mit der Haltefläche auf der dem äußeren Stützring zugewandten Seite eines jeden Stegkörpers durch eine den mittleren Bereich ihrer Umfangserstreckung durchschneidende, gedachte Linie verbunden sind, die mit einer die Linie durchschneidende Radialebene einen Winkel von 15 bis 75° einschließt und daß die Anschlagpuffer in axialer Richtung beiderseits außerhalb der axialen Erstreckung der Stegkörper vorgesehen sind.

Die herstellungsbedingten Zugspannungen, die einen gebrauchsdauerverringernden Einfluß auf gummielastische Werkstoffe haben, werden durch diese Ausgestaltung zuverlässig verhindert. Ein herstellungsbedingtes Schrumpfen der Stegkörper bedingt nicht, wie bei in radialer Richtung angeordneten Stegkörpern Zugspannungen, sondern lediglich eine Relativverdrehung von innerem Stützring und äußerem Stützring zueinander. Desweiteren ist von Vorteil, daß durch die Anordnung der Stegkörper zwischen dem Innen- und dem Außenring eine vergleichsweise große Nachgiebigkeit realisiert werden kann. Ein geräuscharmer Betrieb des Lagers wird dadurch bedingt.

Hierbei ist von Vorteil, daß die Stegkörper in axialer Richtung von den Stützringen überragt sind und die Stützringe dadurch die Stegkörper vor Beschädigungen schützen. Die Anschlagpuffer begrenzen extreme Auslenkungen des inneren Stützringes und des äußeren Stützringes in radialer Richtung relativ zueinander. Die Belastungen auf die Halteflächen der Stegkörper können durch diese Ausgestaltung reduziert werden ebenso, wie beispielsweise Extremauslenkungen der geführten Welle vermieden werden können.

Zwar ist aus der US-A- 4655614 ein Lager bekannt, welches aus jeweils einem über biegeweiche Verstrebungen untereinander verbundenen Innen- und Außenring besteht, wobei die Verstrebungen unter einen Winkel von ungefähr 30 bis 45° angeordnet sind. Das Material der Verstrebungen ist nicht angegeben und die Verstrebungen weisen daher nicht die für die Erfindung typische Problemstellung bei Stegkörpern aus gummielastischem Material auf. Auch bei diesem Lager ist zwischen den benachbarten Verstrebungen jeweils ein Anschlagpuffen angeordnet. Weiterhin dient das Lager zur Abstützung einer stationären Schutzabdeckung auf einem Antriebszapfer, welche unter einem Radialversatz bzw. einer Winkelstellung betrieben werden kann.

Die Stegkörper und die Anschlagpuffer können einstückig in die Stützringe übergehend ausgebildet sein.

Die Anschlagpuffer können durch in radialer Richtung vorspringende, in sich geschlossen umlaufende Wulste gebildet sein oder durch in radialer Richtung vorspringenden Noppen, die gleichmäßig in Umfangsrichtung verteilt und einander mit umfangsseitigem Abstand benachbart zugeordnet sind. Die Größe der Endlagendämpfung der beiden Stützringe in radialer Richtung relativ zueinander wird weitgehend durch die Geometrie der Anschlagpuffer und durch den verwendeten, gummielastischen Werkstoff bestimmt.

In Abhängigkeit von den jeweiligen Gegebenheiten des Anwendungsfalles haben sich Winkel als vorteilhaft bewährt, die 30 bis 60° betragen. Durch diese Ausgestaltung wird einerseits eine ausreichend große Nachgiebigkeit im Hinblick auf die Vermeidung von Betriebsgeräuschen gewährleistet und andererseits geringe mechanische Biegebelastungen auf die Halteflächen der Stegkörper während der bestimmungsgemäßen Verwendung des Lagers.

Die Stegkörper können gleichmäßig in Umfangsrichtung verteilt sein, wobei bevorzugt zumindest fünf gleichmäßig in Umfangsrichtung verteilte Stegkörper vorgesehen sind. Gelangen beispielsweise fünf gleichmäßig in Umfangsrichtung verteilte Stegkörper zur Anwendung, kann das Lager unter Beibehaltung gleichbleibend guter Gebrauchseigenschaften in beliebiger Lage montiert werden.

Hinsichtlich einer weiter verbesserten Gebrauchsdauer können die Stegkörper im Bereich ihrer Halteflächen eine in Umfangsrichtung zunehmende Erstreckung aufweisen. Zusätzlich oder alternativ besteht die Möglichkeit, daß die Stegkörper zumindest teilweise mit einer Armierung verstärkt sind. Eine Armierung ist insbesondere im Bereich der Halteflächen der Stegkörper von Nutzen, aufgrund der während der bestimmungsgemäßen Verwendung auftretenden mechanischen Beanspruchung.

Im Hinblick auf eine dauerhaltbare, zuverlässige Festlegung der Stegkörper zwischen den Stützringen kann zumindest einer der Stützringe durch eine Metalleinlage versteift sein, die von dem elastischen Gummiwerkstoff durchdrungene Durchbrechungen aufweist, wobei der Gummiwerkstoff auf der den Stützkörpern abgewandten Seite der Durchbrechungen ineinander übergehend ausgebildet ist. Eine zuverlässige, adhäsive und formschlüssige Verbindung der Stegkörper zwischen den Stützringen ist dadurch gewährleistet.

Das erfindungsgemäße Gummilager wird nachfolgend anhand der als Anlage beigefügten Zeichnungen näher beschrieben. Die Zeichnungen zeigen Ausführungsbeispiele des Lagers in schematischer Darstellung.
- In Figur 1: ist ein Ausführungsbeispiel eines nicht alle erfindungsgemäßen Merkmale aufweisenden Lagers in einer Ansicht zur Verdeutlichung der Konstruktion gezeigt.
- In Figur 2: ist das in Figur 1 gezeigte Ausführungsbeispiel in einem Schnitt entlang der Linie A - A gezeigt.
- In Figur 3: ist ein Ausführungsbeispiel eines erfindungemäßen Lagers gezeigt, wobei ein Lager, entsprechend im wesentlichen Figur 1, mit Anschlagpuffern zur Begrenzung von Extremauslenkungen der beiden Stützringe zueinander vorgesehen ist.

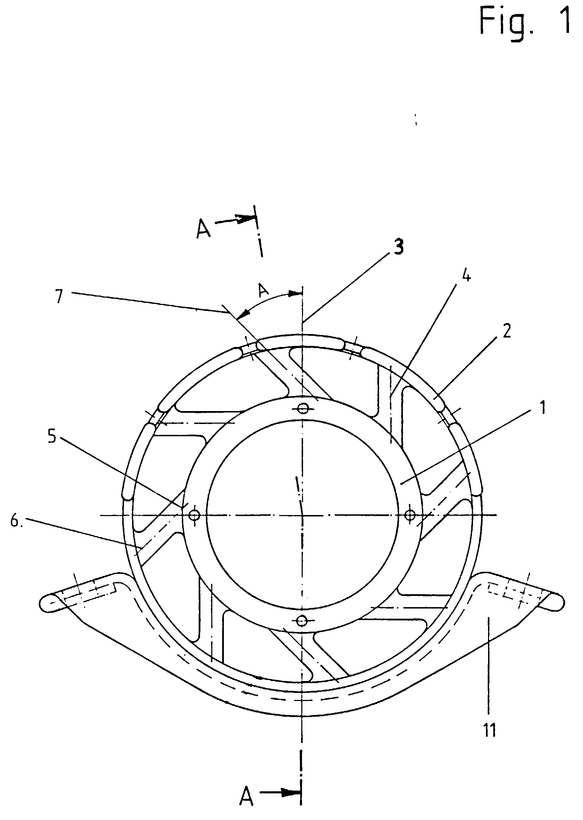

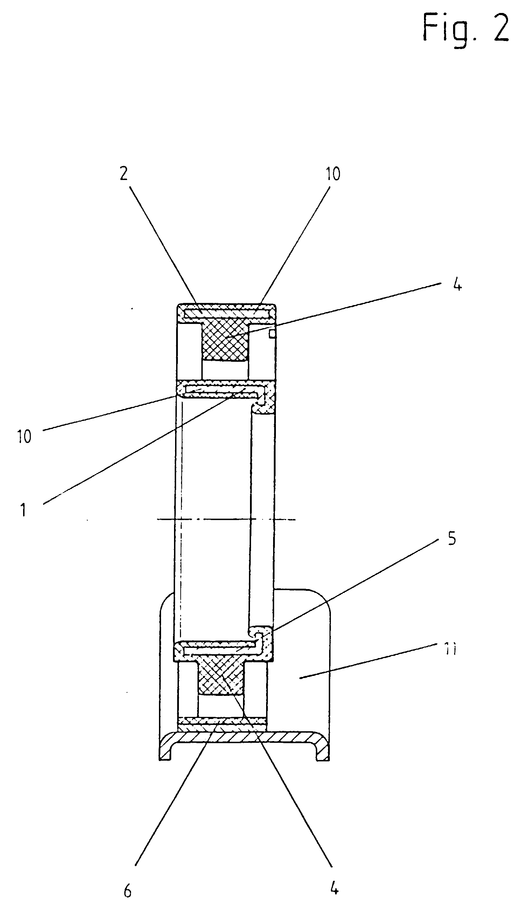

In den Figuren 1 und 2 ist ein Ausführungsbeispiel eines Lagers gezeigt, das beispielsweise als Kardanwellenlager in Kraftfahrzeugen zur Anwendung gelangt. Das Lager umfaßt einen formstabilen inneren Stützring 1 und einen formstabilen äußeren Stützring 2, die in diesem Beispiel aus einem metallischen Werkstoff bestehen und durch einen Stegkörper 4 aus einem gummielastischen Werkstoff radialelastisch aufeinander abgestützt sind. In diesem Ausführungsbeispiel sind acht gleichmäßig in Umfangsrichtung verteilte Stegkörper 4 vorgesehen, die jeweils mit inneren und äußeren Halteflächen 5, 6 an den Stützringen 1, 2 festgelegt sind. Der äußere Stützring 2 ist festhaftend mit einem Lagerhalter 11 verbunden der beispielsweise von Schrauben durchdrungen und mit der Karosserie eines Kraftfahrzeugs verbunden sein kann. Die inneren Halteflächen 5, die auf der dem inneren Stützring 2 zugewandten Seite der Stegkörper 4 angeordnet sind und die äußeren Halteflächen 6, die auf der dem äußeren Stützring 2 zugewandten Seite der Stegkörper 4 angeordnet sind, sind in Umfangsrichtung geneigt zwischen den beiden Stützringen 1, 2 positioniert. Der mittlere Bereich der Umfangserstreckung der inneren und äußeren Haltefläche 5, 6 ist jeweils derart zueinander angeordnet, daß eine den mittleren Bereich der Umfangserstreckung der Halteflächen 5, 6 durchschneidende, gedachte Linie 7 mit einer Radialebene 3, von der sie durchschnitten wird, einen Winkel A einschließt, der in diesem Ausführungsbeispiel ca. 45° beträgt. Abweichende Winkel, beispielsweise zwischen 15 und 75° sind ebenfalls denkbar, wobei die guten Gebrauchseigenschaften während einer langen Gebrauchsdauer auch dann weitgehend erhalten bleiben. Im Bereich ihrer inneren und äußeren Haltefläche 5, 6 weisen die Stegkörper 4 eine in Umfangsrichtung zunehmende Erstreckung auf. Eine bessere Festlegung zwischen dem inneren und dem äußeren Stützkörper 1, 2 ist dadurch gewährleistet.

Wie aus Figur 2 ersichtlich, sind sowohl der innere als auch der äußere Stützring 1, 2 durch Metalleinlagen 10 versteift, die von dem elastischen Gummiwerkstoff durchdrungene Durchbrechungen aufweisen, wobei der Gummiwerkstoff auf der von den Stegkörpern 4 abgewandten Seite der Durchbrechungen ineinander übergehend ausgebildet ist. Zusätzlich zu der adhäsiven Festlegung der Stegkörper 4 zwischen den Stützringen 1, 2 wird durch diese Ausgestaltung eine formschlüssige Verbindung erreicht, so daß die vorteilhaften Gebrauchseigenschaften während einer sehr langen Gebrauchsdauer erhalten bleiben.

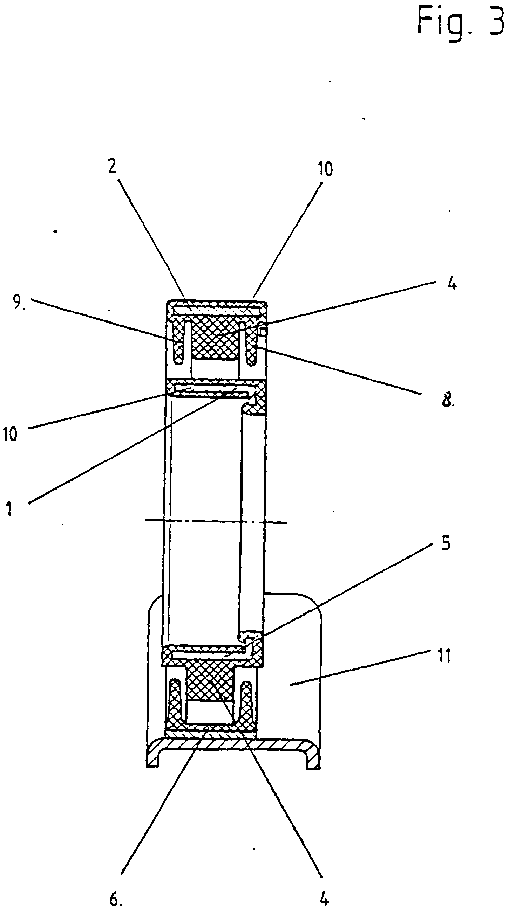

In Figur 3 ist ein Lager, ähnlich dem Lager aus den Figuren 1 und 2 dargestellt, wobei zwischen dem inneren und dem äußeren Stützring 1, 2 Anschlagpuffer 8, 9 vorgesehen sind, die einstückig mit den Stützringen 1, 2 ausgebildet sind. Die Anschlagpuffer 8, 9 erstrecken sich vom äußeren Stützring 2 radial in Richtung des inneren Stützrings 1 und sind bei Extremauslenkungen der beiden Stützkörper 1, 2 relativ zueinander mit der Gegenfläche in Eingriff bringbar.

Über diesen Unterschied hinaus unterscheiden sich die Wirkungsweise und die vorteilhaften Gebrauchseigenschaften von den in den Figuren 1 und 2 beschriebenen nicht.

## Patentansprüche

1. Lager, umfassend einen inneren Stützring (1) und einen den inneren Stützring mit radialem Abstand umschließenden äußeren Stützring (2), die durch zumindest drei in Umfangsrichtung verteilte Stegkörper (4) aus gummielastischem Werkstoff radialelastisch aufeinander abgestützt sind, wobei die Stegkörper (4) mit Halteflächen (5, 6) an den Stützringen (1, 2) festgelegt sind, und eine geringere axiale Ausdehnung aufweisen als die Stützringe (1, 2) und wobei, ausgehend von zumindest einem der Stützringe (1, 2), zumindest zwei radial sich in Richtung des anderen Stützringes (2, 1) erstreckende Anschlagpuffer (8, 9) aus gummielastischem Werkstoff vorgesehen sind dadurch gekennzeichnet, daß die Haltefläche (5) auf der dem inneren Stützring (1) zugewandten Seite mit der Haltefläche (6) auf der dem äußeren Stützring (2) zugewandten Seite eines jeden Stegkörpers (4) durch eine den mittleren Bereich ihrer Umfangserstreckung durchschneidende, gedachte Linie (7) verbunden sind, die mit einer die Linie (7) durchschneidenden Radialebene (3) einen Winkel (A) von 15 bis 75° einschließt und daß die Anschlagpuffer (9) in axialer Richtung beiderseits außerhalb der axialen Erstreckung der Stegkörper (4) vorgesehen sind.

2. Lager nach Anspruch 1, dadurch gekennzeichnet, daß die Stegkörper (4) und die Anschlagpuffer (9, 10) einstückig in die Stützringe (1, 2) übergehend ausgebildet sind.

3. Lager nach Anspruch 1 oder 2, dadurch gekennzeichnet, daß die Anschlagpuffer (8, 9) durch in radialer Richtung vorspringende, in sich geschlossen umlaufende Wulste gebildet sind.

4. Lager nach Anspruch 1 oder 2, dadurch gekennzeichnet, daß die Anschlagpuffer (8, 9) durch in radialer Richtung vorspringenden Noppen gebildet sind, die gleichmäßig in Umfangsrichtung verteilt und einander mit umfangsseitigem Abstand benachbart zugeordnet sind.

5. Lager nach einem der Ansprüche 1 bis 4, dadurch gekennzeichnet, daß der Winkel (A) 30 bis 60° beträgt.

6. Lager nach einem der Ansprüche 1 bis 5, dadurch gekennzeichnet, daß die Stegkörper (4) gleichmäßig in Umfangsrichtung verteilt sind.

7. Lager nach einem der Ansprüche 1 bis 6, dadurch gekennzeichnet, daß die Stegkörper (4) im Bereich ihrer Halteflächen (5, 6) eine in Umfangsrichtung zunehmende Erstreckung aufweisen.

8. Lager nach einem der Ansprüche 1 bis 7, dadurch gekennzeichnet, daß die Stegkörper (4) zumindest teilweise mit einer Armierung verstärkt sind.

9. Lager nach einem der Ansprüche 1 bis 8, dadurch gekennzeichnet, daß zumindest einer der Stützringe (1, 2) durch eine Metalleinlage (10) versteift ist, die von dem elastischen Gummiwerkstoff durchdrungene Durchbrechungen aufweist und daß der Gummiwerkstoff auf der den Stegkörpern (4) abgewandten Seite der Durchbrechungen ineinander übergehend ausgebildet ist.

## Claims

1. A bearing comprising an inner supporting ring (1) and an outer supporting ring (2) which surrounds the inner supporting ring with a radial spacing, these supporting rings being supported in a radially elastic manner on one another by at least three web elements made of rubber-elastic material which are distributed in the circumferential direction, the web elements (4) being fixed by means of holding surfaces (5, 6) on the supporting rings (1, 2) and having a shorter axial extent than the supporting rings (1, 2) and, starting from at least one of the supporting rings (1, 2), at least two stop buffers (8, 9) made of rubber-elastic material which extend radially in the direction of the other supporting ring (2, 1) being provided, characterized in that the holding surface (5) on the side facing the inner supporting ring (1) is connected to the holding surface (6) on the side facing the outer supporting ring (2) of each web element (4) by an imaginary line (7) which passes through the central region of its circumferential extent and encloses an angle (A) of 15 to 75° with a radial plane (3) which passes through the line (7), and in that the stop buffers (9) are provided outside the axial extent of the web elements (4) on both sides in the axial direction.

2. A bearing according to claim 1, characterized in that the web elements (4) and the stop buffers (9, 10) are designed in such a way as to merge integrally into the supporting rings (1, 2).

3. A bearing according to either of claims 1 and 2, characterized in that the stop buffers (8, 9) are formed by beads which project in the radial direction and run round uninterrupted.

4. A bearing according to either of claims 1 and 2, characterized in that the stop buffers (8, 9) are formed by knobs which project in the radial direction, are distributed uniformly in the circumferential direction and are arranged adjacent to one another with a circumferential spacing.

5. A bearing according to any one of claims 1 to 4, characterized in that the angle (A) is 30 to 60°.

6. A bearing according to any one of claims 1 to 5, characterized in that the web elements (4) are distributed uniformly in the circumferential direction.

7. A bearing according to any one of claims 1 to 6, characterized in that the web elements (4) have an increasing extent in the circumferential direction in the region of their holding surfaces (5, 6).

8. A bearing according to any one of claims 1 to 7, characterized in that the web elements (4) are reinforced at least in part with a reinforcement.

9. A bearing according to any one of claims 1 to 8, characterized in that at least one of the supporting rings (1, 2) is reinforced by a metal insert (10) which has apertures penetrated by the elastic rubber material, and in that the rubber material is designed to merge on the side of the apertures remote from the web elements (4).

## Revendications

1. Palier, comprenant une bague d'appui intérieure (1) et une bague d'appui extérieure (2) entourant la bague d'appui intérieure avec un écartement radial, qui sont appuyées l'une sur l'autre avec élasticité radiale par au moins trois corps d'entretoise (4) en matière élastomère répartis dans le sens périphérique, les corps d'entretoise (4) étant fixés par des surfaces de retenue (5, 6) aux bagues d'appui (1, 2) et présentant une extension axiale moindre que les bagues d'appui (1, 2) et dans lequel en partant de l'une au moins des bagues d'appui (1, 2), au moins deux tampons d'arrêt (8, 9) en matière élastomère sont prévus, s'étendant radialement dans le sens de l'autre bague d'appui (2, 1), caractérisé en ce que la surface de retenue (5) située sur le côté orienté vers la bague d'appui intérieure (1) est reliée à la surface de retenue (6) située sur le côté orienté vers la bague d'appui extérieure (2) de chaque corps d'entretoise (4) par une ligne imaginaire (7) entrecoupant la zone médiane de son extension périphérique, qui forme un angle (A) de 15 à 75° avec un plan radial (3) entrecoupant la ligne (7) et en ce que les tampons d'arrêt (9) sont prévus dans le sens axial des deux côtés à l'extérieur de l'extension axiale des corps d'entretoise (4).

2. Palier selon la revendication 1, caractérisé en ce que les corps d'entretoise (4) et les tampons d'arrêt (9, 10) sont formés d'une pièce en passant dans les bagues d'appui (1, 2).

3. Palier selon la revendication 1 ou 2, caractérisé en ce que les tampons d'arrêt (8, 9) sont formés par des bourrelets circulaires sans fin, faisant saillie dans le sens radial.

4. Palier selon la revendication 1 ou 2, caractérisé en ce que les tampons d'arrêt (8, 9) sont formés par des bosses faisant saillie dans le sens radial, qui sont réparties uniformément dans le sens périphérique et sont associées les unes aux autres de façon contiguë avec un écartement périphérique.

5. Palier selon l'une des revendications 1 à 4, caractérisé en ce que l'angle (A) est de 30 à 60°.

6. Palier selon l'une des revendications 1 à 5, caractérisé en ce que les corps d'entretoise (4) sont répartis uniformément dans le sens périphérique.

7. Palier selon l'une des revendications 1 à 6, caractérisé en ce que les corps d'entretoise (4) présentent dans la zone de leurs surfaces de retenue (5, 6) une extension croissante dans le sens périphérique.

8. Palier selon l'une des revendications 1 à 7, caractérisé en ce que les corps d'entretoise (4) sont renforcés au moins partiellement avec une armature.

9. Palier selon l'une des revendications 1 à 8, caractérisé en ce qu'au moins l'une des bagues d'appui (1, 2) est renforcée par une couche intermédiaire métallique (10), qui présente des percements traversés par la matière élastomère et en ce que la matière élastomère est formée sur le côté des percements, opposé aux corps d'entretoise (4), en passant dans les uns et les autres.
